# EUROPÄISCHE PATENTANMELDUNG

(11) **EP 4 701 071 A1**
(43) Veröffentlichungstag der Anmeldung: **25.02.2026**
(21) Anmeldenummer: 25179347.7
(22) Anmeldetag: 28.05.2025
(51) Int. Cl.: H02S 20/23, H02S 30/00, F24S 25/60

(54) **HALTEELEMENT FÜR ZUMINDEST EIN SOLARELEMENT, INSBESONDERE EIN PHOTOVOLTAIKMODUL**

(30) Priorität: 20.08.2024 AT 506782024
(71) Anmelder: Büsscher & Hoffmann GmbH, 4470 Enns (AT)
(72) Erfinder: LANDL, Karl, 4470 Enns (AT)
(74) Vertreter: SONN Patentanwälte GmbH & Co KG

(57) **Zusammenfassung**

Halteelement (1) für zumindest ein Solarelement (2), insbesondere ein Photovoltaikmodul, sowie Montageverfahren zur Montage zumindest eines Halteelements aufweisend eine Basisfläche (3), zumindest ein von der Basisfläche (3) permanent abstehendes erstes Aufstandselement (4) zur Auflage und/oder Befestigung des zumindest einen Solarelements (2) und/oder zumindest ein von der Basisfläche (3) permanent abstehendes zweites Aufstandselement (5) zur Auflage und/oder Befestigung des zumindest einen Solarelements (2), wobei das zweite Aufstandselement (5) weiter von der Basisfläche (3) absteht als das erste Aufstandselement (4), wobei an einer Unterseite des Halteelements (1) zumindest eine Verbindungsschicht (6) für eine stoffschlüssige Verbindung mit einer Standfläche (7), insbesondere einer Gebäudefläche, angeordnet ist, wobei die Verbindungsschicht (6) ein Verbindungsmaterial aufweist und das Halteelement (1) von einem Transportzustand in einen Montagezustand, in welchem die Verbindungsschicht (6) mit der Standfläche (7) verbindbar ist, überführbar ist.

## Beschreibung

Die Erfindung betrifft ein Halteelement für zumindest ein Solarelement, insbesondere ein Photovoltaikmodul, aufweisend:
eine Basisfläche;
zumindest ein von der Basisfläche permanent abstehendes erstes Aufstandselement zur Auflage und/oder Befestigung des zumindest einen Solarelements; und/oder
zumindest ein von der Basisfläche permanent abstehendes zweites Aufstandselement zur Auflage und/oder Befestigung des zumindest einen Solarelements, vorzugsweise wobei das zweite Aufstandselement weiter von der Basisfläche absteht als das erste Aufstandselement.

Des Weiteren betrifft die Erfindung eine Anordnung mit zumindest zwei Halteelementen, die direkt oder indirekt über ein Adapterelement miteinander verbunden sind. Weiters umfasst die Erfindung eine Kombination aus einem Halteelement und einem Solarelement sowie eine Konstruktion, bei der ein Halteelement mit einer Standfläche verbunden ist, wobei die Standfläche insbesondere an einem Dach eines Gebäudes angeordnet sein kann. Daneben betrifft die Erfindung ein Herstellungsverfahren für ein Halteelement sowie ein Montageverfahren zur Montage eines solchen Halteelements an einer Standfläche.

Halteelemente der eingangs erwähnten Art werden dazu eingesetzt, Solarelemente auf Dächern oder anderen exponierten Stellen mit viel Sonneneinstrahlung zu montieren. Die Halteelemente ermöglichen dabei sowohl die Befestigung der Solarelemente an einer Standfläche als auch deren Ausrichtung zur Sonne. Zu diesem Zweck sind bei den Halteelementen der eingangs erwähnten Art Aufstandselemente vorgesehen, die unterschiedlich weit von einer Basisfläche abstehen, wodurch die Solarelemente im befestigten Zustand gegenüber der Standfläche geneigt sind.

Die EP 3 828 479 A1 zeigt ein Halteelement mit zwei von einer Basis unterschiedlich hoch abstehenden Auflagen. Mit den Auflagen können Solarelemente verbunden werden. Um beispielsweise eine Dachfläche mit einer Vielzahl an Solarelementen ausstatten zu können, können mehrere gleichartige Halteelemente zu einem Verbund zusammengeschlossen werden. Hierzu weisen die Halteelemente an jeweils den Stirnseiten Verbindungselemente in Form von Aussparungen und Laschen auf. Um ein Halteelement an einer Standfläche zu fixieren, sind Gewichtselemente vorgesehen, die auf der Basis eines Halteelements platziert werden können, sodass das Halteelement aufgrund des Gewichts der Gewichtselemente gegen Verschiebungen gesichert wird. Ein Nachteil bei den Halteelementen der EP 3 828 479 A1 ist jedoch, dass der Transport der Gewichtselemente zur Standfläche mit hohem Aufwand verbunden ist, zumal die Halteelemente typischerweise auf Dächern platziert werden. Darüber hinaus können die Halteelemente bei entsprechend hohen Krafteinwirkungen, wie sie bei starken Stürmen auftreten, dennoch versetzt werden. Zudem belastet das Gewicht der Gewichtselemente die Standfläche zusätzlich, was auf weitläufigen Dächern von beispielsweise Hallen ein Problem darstellen kann. Die Dächer müssen das zusätzliche Gewicht der Gewichtselemente auch bei hoher Schneelast tragen können. Das zusätzliche Gewicht kann des Weiteren zu Beschädigungen von darunterliegenden Dachabdichtungen führen, da spitze Kanten und Ecken der Halteelemente durch die Gewichtselemente stärker gegen die Standfläche und damit gegen die Dachabdichtung gedrückt werden.

Aus der WO 2023/208959 A1 ist eine aufrollbare Montagevorrichtung für Photovoltaikmodule bekannt. Die Montagevorrichtung weist Querstreben auf und kann mit zwei flexiblen Haltebändern, die über die Querstreben miteinander verbunden sind, an einer Standfläche befestigt werden. Die Haltebänder können klebende Materialien aufweisen, wie zum Beispiel Teer, Bitumen, Mörtel oder Harz. Zur Befestigung der Montagevorrichtung werden die Haltebänder zunächst mit einer darunterliegenden Standfläche verbunden. Anschließend werden verschwenkbare Befestigungsstangen von den Querstreben hochgeklappt oder separate Befestigungsstangen montiert, die der Befestigung der Photovoltaikmodule dienen. Ein Nachteil der Montagevorrichtung ist, dass die klebenden Haltebänder großflächig ausgerollt und mit der Standfläche verbunden werden müssen. Dabei können Fehlklebungen oder Selbstklebungen auftreten, die die Haltebänder unbrauchbar machen können.

Im Lichte dieser Ausführungen ist es Aufgabe der vorliegenden Erfindung, die Nachteile des Standes der Technik zu lindern. Vorzugsweise ist es Aufgabe der vorliegenden Erfindung, ein Halteelement, eine Anordnung, eine Kombination, eine Konstruktion, ein Herstellungsverfahren und eine Montageverfahren der eingangs erwähnten Art zur Verfügung zu stellen, mit dem ein Solarelement einfach und gleichzeitig sicher an einer Standfläche befestigt werden kann. Insbesondere sollen Schäden an der Standfläche durch das Halteelement vermieden werden.

Gelöst wird diese Aufgabe durch ein Halteelement gemäß Anspruch 1, eine Kombination gemäß Anspruch 8, eine Konstruktion gemäß Anspruch 10, ein Herstellungsverfahren gemäß Anspruch 12 und ein Montageverfahren gemäß Anspruch 14.

Erfindungsgemäß ist bei einem Halteelement der eingangs erwähnten Art vorgesehen, dass an einer Unterseite des Halteelements zumindest eine Verbindungsschicht für eine stoffschlüssige Verbindung mit einer Standfläche, insbesondere einer Gebäudefläche, angeordnet ist, wobei die Verbindungsschicht ein Verbindungsmaterial, insbesondere ein Bitumenmaterial, aufweist und das Halteelement von einem Transportzustand in einen Montagezustand, in welchem die Verbindungsschicht mit der Standfläche verbindbar ist, überführbar ist. Vorteilhafterweise kann durch die Verbindungsschicht auf zusätzliche, die Standfläche belastende Gewichtselemente wie bei der EP 3 828 479 A1 verzichtet werden. Dadurch werden auch Beschädigungen der Standfläche vermieden, weil die Kanten und Ecken des Halteelements nicht durch ein zusätzliches Gewicht gegen die Standfläche gedrückt werden. Dies ist insbesondere vorteilhaft, wenn die Standfläche eine Abdichtung aufweist, wie dies beispielsweise bei Standflächen an Dächern der Fall ist. Die Verbindungsschicht fungiert dabei vorteilhafterweise als zusätzliche Schutzschicht, die die Standfläche vor einem direkten Kontakt von Kanten und Ecken des Halteelements schützt. Das Verbindungsmaterial kann ein Dachabdichtungsmaterial aufweisen. Bevorzugt ist das Material der Verbindungsschicht dasselbe wie an der Standfläche. Dadurch ergibt sich eine hohe Kompatibilität zwischen der Standfläche und dem Halteelement. Als Verbindungsmaterial kann beispielsweise ein Bitumenmaterial oder ein synthetisches Verbindungsmaterial, beispielsweise ein TPE-Material (TPE: Thermoplastisches Elastomer), insbesondere ein TPO-Material (TPO: Thermoplastisches Elastomer auf Olefinbasis), verwendet werden. TPO kann auch als FPO (FPO: Flexible Polyolefine) bezeichnet werden. Durch die elastischen Eigenschaften des Bitumenmaterials kann die Verbindungsschicht geringe thermische Längenänderungen der Halteelemente bzw. der Solarmodule problemlos kompensieren. Zusätzlich kann auch ein Befestigungselement vorgesehen sein, das zum Ausgleich von thermischen Längenänderungen geeignet ist. Ein weiterer Vorteil der Erfindung ist, dass die Verbindungsschicht an der Unterseite des Halteelements angebracht ist und somit nicht noch zusätzlich zur Standfläche transportiert und an dieser in einem separaten Arbeitsschritt angebracht werden muss. Die Verbindungsschicht ist vorzugsweise direkt, ohne dazwischenliegende Trägerschicht, an der Unterseite des Halteelements angebracht und somit stoffschlüssig mit dieser verbunden. Bei einer vorteilhaften Ausführungsform ist die Verbindungsschicht mit der Basisfläche, insbesondere mit der Unterseite der Basisfläche, verbunden, und zwar wie bereits erwähnt bevorzugt direkt. Bei einer Ausführungsform der Erfindung ist die Verbindungsschicht im Wesentlichen mittig an der Basisfläche angebracht. Die Verbindungsschicht kann sich im Wesentlichen über die gesamte Unterseite der Basisfläche oder nur Teile davon erstrecken. Vorzugsweise ist die Verbindungsschicht, die auch als Klebeschicht bezeichnet werden kann, im Wesentlichen plan, d.h. ungewölbt und somit eben, ausgebildet.

Günstig ist, wenn die Verbindungsschicht eine über die gesamte Verbindungsschicht betrachtet im Wesentlichen gleiche Dicke aufweist. Die Verbindungsschicht kann eine Fläche von zumindest 0,2 m², vorzugsweise von zumindest 0,25 m², aufweisen. Die Verbindungsschicht ist vorzugsweise eine zusammenhängende, also einteilige, Verbindungsschicht. Die Verbindungsschicht kann bereits bei der Herstellung des Halteelements auf dessen Unterseite aufgebracht werden. Somit kann das Halteelement mit der Verbindungsschicht ausgeliefert und zur Standfläche transportiert werden. Ein separates Anbringen der Verbindungsschicht an der Standfläche entfällt somit. An der Standfläche muss das Halteelement lediglich noch mit der Standfläche durch Auflegen und gegebenenfalls Erwärmen verbunden werden. Das Halteelement wird zu diesem Zweck mit der Verbindungsschicht auf die Standfläche gelegt. Wenn das Verbindungsmaterial, beispielsweise das Bitumenmaterial, beispielsweise bereits bei beispielsweise 30 °C verbindend wirkt und die Umgebungstemperatur über dieser Temperatur liegt, genügt es, das Halteelement auf die Standfläche aufzulegen und, bei einer Ausführungsform der Erfindung, kann auch für einen Zeitraum von beispielsweise 5 - 20 Minuten eine Gewichtskraft, z.B. mittels Beschwerung, auf die Standfläche aufgebracht werden. Falls das Verbindungsmaterial bei der gegebenen Umgebungstemperatur nicht verbindend wirkt, beispielsweise weil es kalt ist, oder auch wenn beispielsweise ein Bitumenmaterial eingesetzt wird, das eine Bitumenkomponente mit guten Klebeeigenschaften enthält, kann das Halteelement vor oder nach Auflegen auf die Standfläche erwärmt werden. Die Erwärmung kann beispielsweise mit einem Heißluftföhn erfolgen. In dem Transportzustand kann sich das Halteelement in einem Zustand befinden, in dem ein Verbinden der Verbindungsschicht mit der Umgebung verhindert wird. Dies kann beispielsweise dadurch erfolgen, dass ein Verbindungsmaterial verwendet wird, das erst bei einer Temperatur von beispielsweise über 80° aufweicht und verbindend wirkt. Alternativ oder zusätzlich können auch ein oder mehrere Abstandshalter an dem Halteelement vorgesehen sein, welche einen direkten Kontakt der Umgebung mit der Verbindungsschicht vermeiden. Bei einer bevorzugten Ausführungsform der Erfindung kann eine Schutzfolie an der Verbindungsschicht angeordnet sein. Das Halteelement kann an der Standfläche beispielsweise durch Erwärmen des Halteelements, durch Entfernen des einen oder der mehreren Abstandshalter und/oder durch Abziehen der Schutzfolie in den Montagezustand überführt werden. Im Montagezustand kann das Halteelement mit der Standfläche verbunden werden. Bevorzugt wird ein Bitumenmaterial verwendet, dessen Verbindung zum Halteelement Zugkräften von zumindest 0,2 N/mm² standhält. Die Klebeverbindung mit der Standfläche, welche üblicherweise ebenfalls Bitumen oder TPE enthält, hält zumindest den gleichen Zugkräften, üblicherweise sogar höheren Zugkräften, stand. Die Basisfläche sowie das erste und das zweite Aufstandselement können aus Metall bestehen. Dies ist insbesondere vorteilhaft, wenn die Basisfläche, das erste und/oder das zweite Aufstandselement einstückig ausgeformt sind. Das erste und/oder das zweite Aufstandselement können insbesondere durch Wölben oder Biegen eines die Aufstandselemente und die Basisfläche aufweisenden Grundkörpers ausgeformt werden. Vorzugsweise ist das erste Aufstandselement in einem Nahbereich einer Stirnseite des Halteelements vorgesehen und das zweite Aufstandselement in einem Nahbereich einer gegenüberliegenden Stirnseite. So kann für eine ausreichende Abstützung des zu tragenden Solarelements gesorgt werden. Das erste und das zweite Aufstandselement sind vorzugsweise an gegenüberliegenden Endbereichen der Basisfläche angebracht. Mit anderen Worten befindet sich die Basisfläche zwischen dem ersten und dem zweiten Aufstandselement. Wenn die Verbindungsschicht somit an der Unterseite der Basisfläche angebracht ist, befindet sich die Verbindungsschicht zwischen den Aufstandselementen. Das erste Aufstandselement kann beispielsweise zwischen 5 cm und 15 cm von der Basisfläche nach oben hin abstehen. Das zweite Aufstandselement kann beispielsweise zwischen 15 cm und 35 cm von der Basisfläche nach oben hin abstehen. Das Halteelement kann eine Länge zwischen 90 cm und 250 cm und eine Breite zwischen 20 cm und 35 cm aufweisen. Zur Erhöhung der Stabilität können die Basisfläche, das erste Aufstandselement und/oder das zweite Aufstandselement eine oder mehrere Sicken aufweisen. Das Solarelement kann auf dem ersten und/oder zweiten Aufstandselement aufliegen und/oder an diesem/n mittels eines oder mehrerer Befestigungselemente befestigt sein. Günstig ist, wenn das erste und/oder das zweite Aufstandselement jeweils eine Oberseite besitzt/en, die in einem Winkel zur Basisfläche geneigt ist/sind.

Die Oberseite der ersten und/oder der zweiten Aufstandsfläche ist dadurch in einem an der Standfläche montierten Zustand vorzugsweise zur Standfläche geneigt. Der Winkel der Oberseite/n des ersten und/oder zweiten Aufstandselements beträgt vorzugsweise zwischen 3° und 15°. Besonders bevorzugt ist, wenn die beiden Aufstandselemente jeweils eine geneigte Oberseite aufweisen, die Teil einer gemeinsamen gedachten Ebene sind, die zur Basisfläche geneigt ist. Die Basisfläche, das erste Aufstandselement und/oder das zweite Aufstandselement bestehen bevorzugt aus Metall, insbesondere aus Stahl, Aluminium oder Kunststoff.

Günstig ist, wenn die Verbindungsschicht aus dem Verbindungsmaterial besteht.

Bei einer Ausführungsform der Erfindung kann vorgesehen sein, dass die Verbindungsschicht einen Überstand ausbildet, der von der Unterseite des Halteelements absteht. Mit dem Überstand kann die Verbindungsschicht über die Unterseite des Halteelements, insbesondere der Basisfläche, dem ersten Aufstandselement und/oder dem zweiten Aufstandselement, hinausragen. Der Überstand kann an einer oder an zwei gegenüberliegenden Seiten des Halteelements vorgesehen sein. Der Überstand kann somit einen von der Unterseite der Basisfläche, des ersten Aufstandselements und/oder des zweiten Aufstandselements abstehenden Rand bilden und die Haltewirkung des Halteelements aufgrund der vergrößerten effektiven Verbindungsfläche erhöhen. Günstig ist, wenn der Überstand eine Breite von zumindest 20 mm oder zumindest 30 mm aufweist. Insbesondere, wenn als Verbindungsmaterial ein TPE-Material verwendet wird, ist der Überstand vorteilhaft.

Bei einer stoffschlüssigen Verbindung mit der Standfläche ergibt sich bei einem typischen Gewicht eines Solarmoduls von ca. 10 bis 15 kg/m² im befestigten Zustand des Solarmoduls eine Flächenpressung von ca. 0,01 kg/cm² bis 0,02kg/cm². Diese im Vergleich zu mittels Gewichtelementen befestigten Halteelementen geringe Flächenpressung ist insbesondere vorteilhaft, um eine Beschädigung der Dachhaut und darunter liegender Dämmmaterialien hintanzuhalten.

Richtungsangaben in dieser Offenbarung beziehen sich, falls nicht anders angegeben, auf einen Gebrauchszustand des Halteelements, in welchem das Halteelement auf einer horizontalen Standfläche angeordnet ist. Richtungsangaben wie "oben" und "unten" beziehen sich dabei auf eine Vertikale parallel zur Erdbeschleunigung.

Bei einer bevorzugten Ausführungsform besteht die Verbindungsschicht aus einem mehrschichtigen Verbindungsmaterial, insbesondere aus einem mehrschichtigen Bitumenmaterial, mit einem verstärkenden Gewebe oder Vlies, auf welches das Verbindungsmaterial vorzugweise beidseitig aufgebracht ist, wobei insbesondere auf beiden Seiten jeweils zwei Verbindungsschichten aufgebracht werden. Hierbei weist das Verbindungsmaterial der äußeren Schicht vorzugsweise einen geringeren Erweichungspunkt als das Verbindungsmaterial der inneren Schicht auf. Das Bitumenmaterial kann somit eine haltbare und zugfeste stoffschlüssige Verbindung sowohl mit der Unterseite des Halteelements als auch mit der Standfläche herstellen.

Bei einer bevorzugten Ausführungsform ist die Verbindungsschicht in dem Transportzustand mit einem vorzugsweise werkzeuglos lösbaren Abdeckelement, insbesondere einer Abdeckfolie, abgedeckt. Die Abdeckfolie kann Silikon aufweisen. Im Transportzustand kann das Abdeckelement ein unerwünschtes Verkleben der Verbindungsschicht mit anderen Halteelementen, Verpackungsteilen oder sonstigen Gegenständen verhindern. Beim Überführen des Halteelements von dem Transportzustand in den Montagezustand kann das Abdeckelement von der Verbindungsschicht gelöst werden, sodass die Verbindungsschicht mit der Standfläche verbunden werden kann.

Vorzugsweise ist das Verbindungsmaterial ein SPS(Styrol-Butadien-Styrol)-modifiziertes Bitumenmaterial. Wenn Bitumenmaterial als Verbindungsmaterial verwendet wird, kann das Bitumenmaterial als Bitumenbahn, Bitumenkleber, Bitumenanstrich, Bitumenspachtelmasse aufgebracht werden. Das Verbindungsmaterial kann neben einer ersten Komponente, insbesondere einer Bitumenkomponente, noch weitere Komponenten enthalten, beispielsweise eine verstärkende Trägereinlage, die beispielsweise ein Glasvlies, ein Glasgewebe oder einen Polyesterfilz enthalten kann. Besonders bevorzugt ist ein mehrschichtiger, insbesondere 5-schichtiger Aufbau, mit einer mittigen Trägereinlage, auf welche beidseits eine erste Verbindungsschicht mit einem Erweichungspunkt zwischen 100° und 130° aufgebracht wird, wobei auf diese erste Verbindungsschicht, vorzugsweise eine Bitumenschicht, jeweils eine zweite kaltselbstklebende Verbindungsschicht, insbesondere eine zweite Bitumenschicht, mit einem Erweichungspunkt zwischen 70 °C und 120 °C, bevorzugt zwischen 75 °C und 100 °C, aufgebracht ist. Der Erweichungspunkt von Bitumen kann mit der sogenannten Ring- und Kugel-Methode gemäß der Norm EN 1427 bestimmt werden.

In einer Ausführungsform wirkt das Verbindungsmaterial im Transportzustand nicht verbindend. Vorzugsweise wird, wie bereits erwähnt, ein Bitumenmaterial eingesetzt. Günstig ist, wenn der Erweichungspunkt der Bitumenkomponente des Bitumenmaterials über der Temperatur des Bitumenmaterials im Transportzustand liegt. Dadurch kann ein unerwünschtes Verkleben der Verbindungsschicht mit anderen Halteelementen, Verpackungsteilen oder sonstigen Gegenständen vermieden werden. Alternativ oder zusätzlich können auch ein oder mehrere Abstandshalter an dem Halteelement vorgesehen sein, welche einen direkten Kontakt der Umgebung mit der Verbindungsschicht vermeiden. So kann ein unerwünschtes Verkleben noch zuverlässiger verhindert werden, selbst dann, wenn sich das Verbindungsmaterial auf eine Temperatur erwärmt, bei der es verbindend wirkt. Anstatt der Abstandshalter kann auch bei dieser Ausführungsform ein Abdeckelement verwendet werden.

Bei einer bevorzugten Ausführungsform ist die Verbindungsschicht direkt mit der Unterseite des Halteelements, insbesondere direkt mit einer Unterseite der Basisfläche, verbunden. Insbesondere ist zwischen der Verbindungsschicht und der Unterseite des Halteelements keine Zwischenschicht, wie beispielsweise eine haftungsvermittelnde Trägerfolie, angeordnet. Vorzugsweise haftet das Verbindungsmaterial selbst bereits ausreichend gut an der Unterseite des Halteelements, sodass die Verbindung den beim bestimmungsgemäßen Gebrauch vorgesehenen Zugkräften standhalten kann. Der Verzicht auf eine Zwischenschicht ermöglicht eine besonders einfache und kostengünstige Ausführung der Erfindung.

Die Verbindungsschicht weist vorzugsweise eine Dicke zwischen 1,5 mm und 7 mm, insbesondere zwischen 2 mm und 7 mm oder zwischen 2,5 mm und 5 mm, auf. Dadurch kann einerseits eine gute Klebewirkung zwischen Halteelement und Standfläche sichergestellt werden, andererseits wird auch der Verbrauch an Verbindungsmaterial beschränkt. Bei einer geringeren Dicke der Verbindungsschicht könnten Unebenheiten, insbesondere auf der Standfläche, möglicherweise nicht mehr ausreichend ausgeglichen werden. Dadurch würde sich die effektive Klebefläche verringern und die Klebewirkung würde abnehmen. Eine dickere Verbindungsschicht würde wiederum zu einem höheren Verbrauch an Verbindungsmaterial und dadurch zu höheren Herstellungskosten führen.

Bei einer bevorzugten Ausführungsform ist/sind das erste und/oder das zweite Aufstandselement integral, insbesondere einstückig, mit der Basisfläche ausgeformt. Bevorzugt sind das erste und das zweite Aufstandselement und die Basisfläche einstückig ausgeformt. Besonders bevorzugt sind die Basisfläche, das erste Aufstandselement und das zweite Aufstandselement aus einem einzigen Ausgangskörper, vorzugsweise einem Metallblech, gefertigt. Die Fertigung kann vorzugsweise durch Umformung, insbesondere durch Tiefziehen, des Ausgangskörpers erfolgen.

Vorzugsweise werden auch etwaige Laschen und/oder Aussparungen des Halteelements vom Ausgangskörper selbst gebildet. Die integrale Fertigung, insbesondere durch Tiefziehen, ermöglicht eine optimierte Materialnutzung, wodurch die Material- und Fertigungskosten gering gehalten werden können. Zudem kann ein integral, insbesondere einstückig, gefertigtes Halteelement eine höhere Stabilität aufweisen als ein aus mehreren Einzelteilen gefertigtes Halteelement.

Alternativ ist möglich, dass das erste und/oder zweite Aufstandselement mechanisch mit der Basisfläche verbunden ist/sind, beispielswiese durch Schrauben oder Nieten.

Bei einer bevorzugten Ausführungsform weist das Halteelement zumindest ein Verbindungselement vorzugsweise an der Basisfläche, an dem ersten und/oder an dem zweiten Aufstandselement auf, welches Verbindungselement zur Verbindung mit einem weiteren, insbesondere gleichartig ausgebildeten, Halteelement eingerichtet ist. Vorzugsweise kann das Halteelement über das Verbindungselement mit einem weiteren Halteelement werkzeuglos verbunden werden.

Bei einer bevorzugten Ausführungsform ist an dem ersten und/oder zweiten Aufstandselement zumindest ein Befestigungselement zur lösbaren Befestigung des zumindest einen Solarelements vorgesehen. Besonders bevorzugt ist es, wenn an dem ersten und zweiten Aufstandselement jeweils zumindest ein Befestigungselement zur lösbaren Befestigung des zumindest einen Solarelements vorgesehen ist. Das Befestigungselement kann beispielsweise eine Montageklemme sein, mit welcher eine lösbare kraftschlüssige Verbindung zwischen dem Halteelement und dem Solarelement herstellbar ist. Der Kraftschluss kann beispielsweise durch das Anziehen mindestens einer Schraube erfolgen.

Bei einer bevorzugten Ausführungsform ist das Befestigungselement zwischen einem Befestigungszustand, in dem das Befestigungselement an einer Position fixiert ist, und einem Anordnungszustand, in dem das Befestigungselement in einer Führung verschieblich ist, überführbar. Vorzugsweise ist in dem Anordnungszustand das Befestigungselement in der Führung in Längs- und/oder in Querrichtung des Halteelements verschieblich. In Querrichtung des Halteelements ist das Befestigungselement vorzugsweise um mindestens 20 mm, bevorzugt um 30 bis 50 mm, verschiebbar. In Längsrichtung des Halteelements ist eine Verschieblichkeit nicht wesentlich und gegebenenfalls geringer als in Querrichtung des Halteelements.

So kann die Position des Solarelements noch nachjustiert werden, wenn das Halteelement bereits mit der Standfläche verbunden ist. Ungenauigkeiten bei der Ausrichtung der Halteelemente können also nachträglich durch das Befestigungselement korrigiert werden. Das Überführen des Befestigungselements zwischen dem Befestigungszustand und dem Anordnungszustand kann durch Lockern und Anziehen mindestens einer Schraube erfolgen.

Vorzugsweise ist die Führung durch eine Aussparung im ersten und/oder zweiten Aufstandselement gebildet. Die Aussparung kann beispielsweise langlochförmig ausgebildet sein.

Die Führung ist vorzugsweise aus demselben Ausgangskörper gefertigt, aus dem die Basisfläche, das erste, und das zweite Aufstandselement gefertigt sind. Das Befestigungselement kann zum Beispiel aus einem Oberteil und einem Unterteil bestehen, die durch eine Schraube miteinander verbindbar sind. Durch Festziehen der Schraube können das Halteelement und das Solarelement zwischen dem Oberteil und dem Unterteil eingeklemmt und so kraftschlüssig miteinander verbunden werden. Vorzugsweise ist das Unterteil des Befestigungselements im Montagezustand des Halteelements unterhalb der Oberseite des Aufstandselements angeordnet. Das Unterteil ist vorzugsweise in wenigstens einer Richtung breiter als die Führung, sodass im Anordnungszustand das Unterteil nicht aus der Führung rutschen und an die Oberseite des Aufstandselements gelangen kann.

Das erfindungsgemäße Halteelement eignet sich insbesondere für eine einfach und standfest auszubildende Anordnung mit zumindest zwei Halteelementen für zumindest ein Solarelement, die direkt oder indirekt über ein Adapterelement miteinander verbunden sind. Vorzugsweise sind dabei zumindest ein erstes und ein zweites Halteelement über die Verbindungselemente derselben Stirnseiten miteinander verbunden. Diese Anordnung der Halteelemente ist beispielsweise für eine Ost-West-Ausrichtung der Solarmodule besonders geeignet. Die Verwendung eines Adapterelements kann es beispielsweise ermöglichen, die erfindungsgemäßen Halteelemente auch mit andersartigen Halteelementen zu verbinden.

Außerdem kann sich eine Anordnung von mehreren erfindungsgemäßen Halteelementen nacheinander als vorteilhaft herausstellen, bei welcher zumindest zwei Halteelemente über ein Adapterelement miteinander verbunden sind, wobei hierfür das Adapterelement an seinen Stirnseiten Verbindungselemente, welche komplementär zu jenen der Stirnseiten der beiden Halteelemente ausgebildet sind, aufweist. Die Anordnung von Halteelementen mit einem Adapterelement zwischen diesen Halteelementen ist besonders bei einer Süd-Ausrichtung der Solarmodule vorteilhaft.

Das erfindungsgemäße Halteelement eignet sich im Besonderen für eine Kombination, insbesondere für eine Solaranlage, aus zumindest einem Halteelement für zumindest ein Solarelement und zumindest einem Solarelement, welches vorzugsweise lösbar mit dem zumindest einen Halteelement verbunden ist.

Vorzugsweise sind bei der Kombination eine Mehrzahl an Halteelementen und eine Mehrzahl an Solarelementen vorgesehen, wobei mehrere Halteelemente vorzugsweise miteinander verbunden sind, insbesondere direkt oder indirekt über ein Adapterelement. Die oben im Zusammenhang mit der Anordnung von Halteelementen beschriebenen Effekte und Vorteile gelten sinngemäß auch für die erfindungsgemäße Kombination einer Mehrzahl an Halteelementen und einer Mehrzahl an Solarelementen.

Die Aufgabe wird auch gelöst durch eine Konstruktion, insbesondere eine Dachkonstruktion, mit einem erfindungsgemäßen Halteelement, welches mit einer Standfläche, welche insbesondere an einem Dach eines Gebäudes angeordnet ist, stoffschlüssig verbunden ist. Vorzugsweise hält die Konstruktion Zugkräften von mindestens 0,2 N/mm² stand, ohne wesentlich beschädigt zu werden. Die Standfläche kann beispielsweise eine Dachhaut sein, die eine oder mehrere Lagen von Dachbahnen aufweisen kann. Als Dachbahnen können unter anderem Bitumenbahnen oder Kunststoffbahnen, wie beispielsweise PVC-Bahnen, TPO-Bahnen, oder EPDM-Bahnen, zum Einsatz kommen. Durch eine möglichst große Aufstandsfläche des Halteelements auf der Standfläche kann eine möglichst geringe Druckbelastung auf die Standfläche erreicht werden. Die Aufstandsfläche entspricht vorzugsweise der Fläche der Verbindungsschicht des Halteelements. Die Aufstandsfläche beträgt vorzugsweise mindestens 0,25 m² pro Halteelement. Vorzugsweise wird bei der Konstruktion eine Flächenpressung der Standfläche von max. 0,01 kg/cm² erreicht. Durch die vergleichsweise geringe Flächenpressung kann eine Beschädigung der Standfläche durch Drucckräfte vermieden werden. Eine möglichst geringe Flächenpressung ist insbesondere dann bedeutsam, wenn sich unter der Standfläche ein Dämmstoff befindet, der durch eine zu hohe Druckbelastung eingedrückt werden könnte, wodurch auch eine darüber liegende Dachhaut Schaden nehmen und das Dach undicht werden könnte.

Bei einer bevorzugten Ausführungsform ist an der Standfläche eine weitere Verbindungsschicht angeordnet, die vorzugsweise ein weiteres Verbindungsmaterial, insbesondere ein weiteres Bitumenmaterial, aufweist, insbesondere aus diesem besteht. Die weitere Verbindungsschicht kann durch eine Dachhaut gebildet sein, welche vorzugsweise eine oder mehrere Lagen von Bitumenbahnen aufweist. Die Dachhaut kann auch eine oder mehrere Lagen von Kunststoffbahnen aufweisen, welche mit der Verbindungsschicht des Halteelements verbindbar sind. Die Verbindungsschicht des Halteelements kann an der Verbindungsschicht der Standfläche vorzugsweise durch Erhitzen angeschweißt werden.

Die Aufgabe wird auch durch ein Herstellungsverfahren nach Anspruch 16 oder 17 sowie durch ein Montageverfahren nach einem der Ansprüche 18 bis 20 gelöst. Die oben in Zusammenhang mit dem Halteelement beschriebenen Merkmale, technischen Effekte und Vorteile sind entsprechend auf das Herstellungsverfahren und das Montageverfahren übertragbar.

Das erfindungsgemäße Herstellungsverfahren für ein Halteelement umfasst die Schritte:
Erzeugen der Basisfläche, des ersten Aufstandselements und/oder des zweiten Aufstandselements, vorzugsweise durch Umformung, insbesondere durch Tiefziehen, eines Ausgangskörpers;
Anbringen der Verbindungsschicht, die das Verbindungsmaterial aufweist, insbesondere auf die Basisfläche.

Bevorzugt werden das erste und das zweite Aufstandselement und die Basisfläche integral gefertigt. Besonders bevorzugt werden die Basisfläche, das erste Aufstandselement und das zweite Aufstandselement aus einem einzigen Ausgangskörper, vorzugsweise einem Metallblech, hergestellt. Vorzugsweise wird auch ein Verbindungselement des Halteelements aus demselben Ausgangskörper gefertigt. Die integrale Fertigung, insbesondere durch Tiefziehen, ermöglicht eine optimierte Materialnutzung, wodurch die Material- und Fertigungskosten gering gehalten werden können.

Vorzugsweise wird die Verbindungsschicht bereits bei der Herstellung des Halteelements stoffschlüssig mit der Basisfläche verbunden. Dadurch kann die Montage des Halteelements vereinfacht werden, da die Verbindungsschicht bei der Montage nurmehr mit einer Standfläche verbunden werden muss. Ein verklebungsfreier Transport eines oder mehrerer Halteelemente kann, wie oben beschrieben, beispielsweise durch Anbringen eines Abdeckelements oder eines Abstandhalters, oder durch Vorsehen eines eine Komponente mit einem hohen Erweichungspunkt, beispielsweise über 80 °C, enthaltenden Verbindungsmaterials erreicht werden.

Vorzugsweise besteht die Verbindungsschicht aus dem Verbindungsmaterial und wird bei der Herstellung des Halteelements direkt auf die Unterseite der Basisfläche aufgetragen. Insbesondere wird zwischen der Verbindungsschicht und der Unterseite des Halteelements keine Zwischenschicht, wie beispielsweise eine haftungsvermittelnde Trägerfolie, angebracht. Dadurch ist eine besonders einfache und kostengünstige Herstellung der Verbindungsschicht möglich.

Das erfindungsgemäße Montageverfahren zur Montage zumindest eines erfindungsgemäßen Halteelements an einer Standfläche umfasst die Schritte:
i) Bereitstellen des zumindest einen Halteelements;
ii) Überführen des zumindest einen Halteelements von dem Transportzustand in den Montagezustand, vorzugsweise durch Abnehmen eines Abdeckelements von der Verbindungsschicht;
iii) Anordnen des zumindest einen Halteelements an der Standfläche, wobei die Verbindungsschicht der Standfläche zugewandt ist; und
iv) Verbinden der Verbindungsschicht mit der Standfläche, wobei die Standfläche vorzugsweise eine weitere Verbindungsschicht aufweist.

Vorzugsweise wird beim Überführen des Halteelements von dem Transportzustand in den Montagezustand das Abdeckelement von der Verbindungsschicht gelöst. Das Halteelement ist beim Lösen des Abdeckelements von der Verbindungsschicht vorzugsweise bereits in seiner endgültigen Montageposition auf der Standfläche angeordnet und muss nicht mehr weiter verschoben oder ausgerichtet werden. Vorzugsweise erfolgt das Lösen des Abdeckelements von der Verbindungsschicht ohne ein wesentliches Anheben des Halteelements von der Standfläche. So kann ein unbeabsichtigtes Verrutschen des Halteelements beim Lösen des Abdeckelements vermieden werden. Besonders vorteilhaft ist es, wenn bei Verwendung mehrerer erfindungsgemäßer Halteelemente zuerst sämtliche Halteelemente auf der Standfläche angeordnet und zueinander ausgerichtet werden, bevor die Abdeckelemente von den Verbindungsschichten der Halteelemente gelöst werden.

Die Verbindungsschicht des Halteelements und die Verbindungsschicht der Standfläche werden vorzugsweise stoffschlüssig verbunden, insbesondere durch eine Klebe- oder Schweißverbindung.

Besonders vorteilhaft ist es, wenn auch die weitere Verbindungsschicht der Standfläche ein Verbindungsmaterial, insbesondere ein Bitumenmaterial, aufweist. Das Verbindungsmaterial der Standfläche und das Verbindungsmaterial der Verbindungsschicht können dann eine besonders haltbare und zugfeste stoffschlüssige Verbindung eingehen.

Bei einer Ausführungsform der Erfindung enthält das Montageverfahren den weiteren Schritt
iv-a) Erwärmen der Verbindungsschicht und/oder der Standfläche, beispielsweise mit einer Heißluftvorrichtung oder einer Flämmvorrichtung, mit Heizelementen oder durch Sonneneinstrahlung. Durch das Erwärmen kann das Verbindungsmaterial der Verbindungsschicht aufgeweicht werden, sodass, wenn beispielsweise Bitumenmaterial verwendet wird, die Fließfähigkeit der Bitumenkomponente des Bitumenmaterials verbessert wird, wodurch das Bitumenmaterial eine haltbare und zugfeste stoffschlüssige Verbindung mit der Standfläche eingehen kann.

Wenn das Halteelement und/oder die Standfläche einen Korrosionsschutz, beispielsweise eine Zinkschicht oder einen Anstrich, aufweist, ist eine flammlose Erwärmung bevorzugt, um den Korrosionsschutz nicht zu beschädigen. Die Erwärmung des Verbindungsmaterials kann auch indirekt erfolgen, indem beispielsweise die Oberseite des Halteelements oder die Standfläche erwärmt wird, wobei durch Wärmeleitung Wärme auf das Verbindungsmaterial übertragen wird. Ein Erwärmen der Standfläche ist besonders dann vorteilhaft, wenn die Standfläche ein Verbindungsmaterial, insbesondere ein Bitumenmaterial, aufweist. Das Verbindungsmaterial der Standfläche kann dann mit dem Verbindungsmaterial der Verbindungsschicht eine besonders haltbare und zugfeste stoffschlüssige Verbindung, vorzugsweise eine Schweißverbindung, eingehen.

Wenn die Standfläche eine Dachhaut aus Kunststoff-Dachbahnen ist, erfolgt das Aufschweißen der Verbindungsschicht des Halteelements vorzugsweise mit Heißluft.

Bei einer bevorzugten Ausführungsform wird die Verbindungsschicht und/oder die Standfläche auf zumindest 60 °C, vorzugsweise zumindest 70 °C, zumindest 80 °C, zumindest 150 °C oder zumindest 200 °C, erwärmt. Vorzugsweise wird dabei die Temperatur des Verbindungsmaterials über den Erweichungspunkt angehoben. Wenn beispielsweise ein Bitumenmaterial verwendet wird, wird die Temperatur über den Erweichungspunkt der Bitumenkomponente des Bitumenmaterials angehoben. Dadurch wird eine besonders hohe Fließfähigkeit der Bitumenkomponente des Bitumenmaterials und dadurch eine besonders haltbare und zugfeste stoffschlüssige Verbindung erreicht.

Die Erfindung wird nachstehend anhand eines bevorzugten Ausführungsbeispiels in den Zeichnungen weiter erläutert.
Fig. 1 zeigt eine dreidimensionale Ansicht einer ersten Variante des Halteelements.
Fig. 1a zeigt eine dreidimensionale Ansicht einer zweiten Variante des Halteelements.
Fig. 1b zeigt eine dreidimensionale Ansicht einer dritten Variante des Halteelements
Fig. 2 zeigt das Halteelement nach Fig. 1 in der Untersicht.
Fig. 3 zeigt ein Befestigungselement im Querschnitt.
Fig. 3a zeigt das Befestigungselement in der Untersicht.
Fig. 4 zeigt ein alternatives Befestigungselement im Querschnitt.
Fig. 4a zeigt eine Seitenansicht des Halteelements mit dem alternativen Befestigungselement.
Fig. 4b zeigt eine Draufsicht des Halteelements mit einer Aussparung für das alternative Befestigungselement.
Fig. 5 zeigt eine dreidimensionale Ansicht einer Solaranlage mit mehreren Halteelementen und Solarelementen.

In den nachfolgenden Ausführungsbeispielen wird als Verbindungsmaterial ein Bitumenmaterial verwendet. Die Erfindung ist jedoch nicht auf die Verwendung von Bitumenmaterial als Verbindungsmaterial beschränkt. Anstelle von Bitumenmaterial kann beispielsweise auch ein synthetisches Material, beispielsweise ein TPE-Material (Thermoplastisches Elastomer), insbesondere ein TPO-Material (Thermoplastisches Elastomers auf Olefinbasis), verwendet werden.

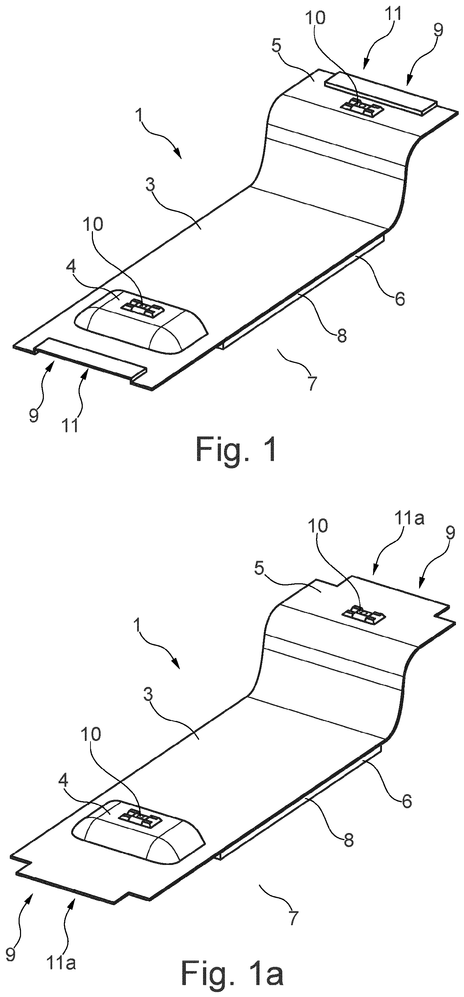

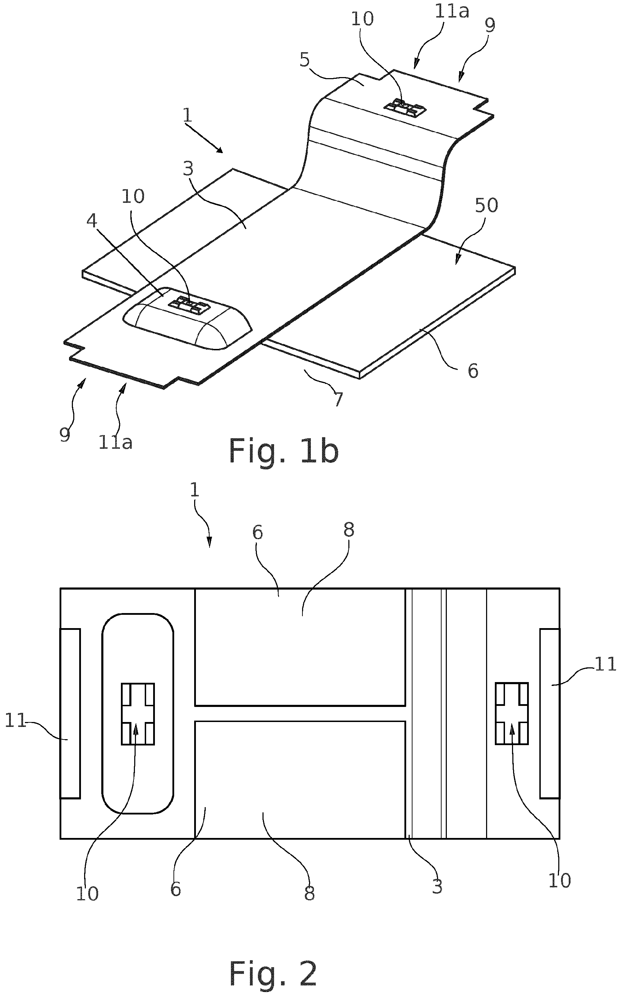

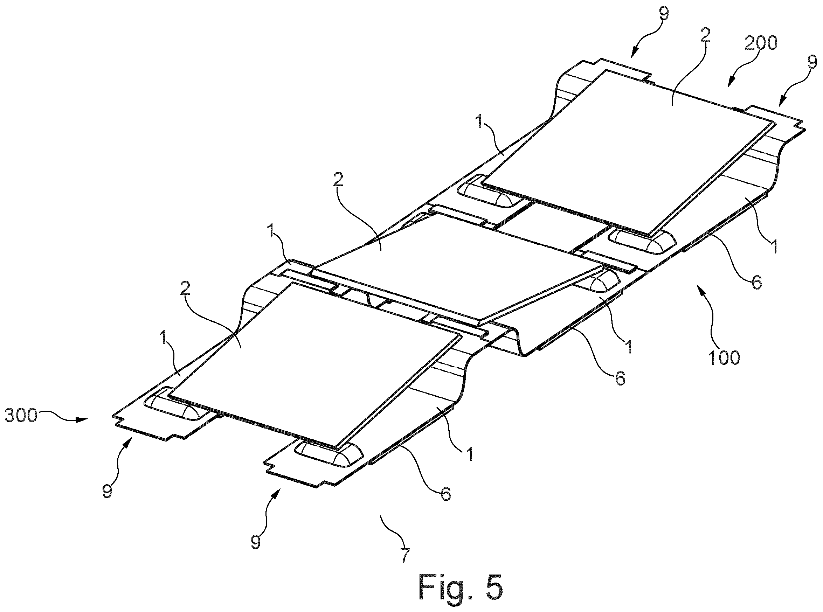

Fig. 1 zeigt ein beispielhaftes längliches Halteelement 1, das aus einem länglichen Metallblech durch Umformen, insbesondere durch Tiefziehen, hergestellt ist. Mit dem Halteelement 1 kann mindestens ein Solarelement 2 auf einer Standfläche 7, zum Beispiel auf dem Dach eines Gebäudes, befestigt werden, wie in Fig. 5 ersichtlich. Das Halteelement 1 weist dafür eine längliche Basisfläche 3 auf, an deren Unterseite eine Verbindungsschicht 6 angebracht ist. Die Verbindungsschicht 6 besteht aus einem Verbindungsmaterial, in der gezeigten Darstellung einem Bitumenmaterial 8, insbesondere aus einem SPS-modifizierten Bitumen, weist eine Dicke von ca. 4 mm auf und ist bei der Anlieferung auf die Baustelle bereits mit der Unterseite der Basisfläche 3 verklebt. Das SPS-modifizierte Bitumen kann mehrschichtig ausgebildet sein, wobei vorzugsweise auf ein Trägermaterial beidseitig eine innere Schicht mit einem höheren Erweichungspunkt von ca. zwischen 100° und 130° und beidseitig eine äußere Schicht aus einem kaltselbstklebenden Bitumen mit einem Erweichungspunkt zwischen 75 °C und 100 °C vorgesehen ist. Das Halteelement wird in einem Transportzustand auf die Baustelle angeliefert, in welchem die Verbindungsschicht 6 mit einer silikonhaltigen Abdeckfolie (nicht abgebildet) bedeckt ist, die ein unbeabsichtigtes Verkleben des Bitumenmaterials 8 mit anderen Gegenständen verhindert. Das Halteelement 1 wird bei der Montage mit der Verbindungsschicht 6 nach unten auf die Standfläche 7 gestellt. Erst dann wird die Abdeckfolie von der Verbindungsschicht 6 abgezogen. Dafür ist kein Anheben des Halteelements 1 notwendig, da die Folie vorzugsweise über das Halteelement hervorsteht und somit auf einfache Weise im aufgestellten Zustand vom Halteelement abgezogen werden kann. Bei der Montage von mehreren Halteelementen, wie in Fig. 5 abgebildet, werden die Halteelemente 1 zuerst verbunden und in ihrer endgültigen Position ausgerichtet, bevor die Abdeckfolien entfernt werden.

Nach dem Abziehen der Abdeckfolie(n) wird das Bitumenmaterial 8 der Verbindungsschicht 6 mit einem Heißluftfön auf mindestens 80 °C erwärmt. Durch das Erwärmen klebt das Bitumenmaterial an der Standfläche 7 fest.

Das Halteelement 1 weist ein erstes Aufstandselement 4 und ein zweites Aufstandselement 5 auf, welche im Montagezustand des Halteelements 1 gegenüber der Basisfläche 3 erhöht sind, wobei das zweite Aufstandselement 5 weiter nach oben ragt als das erste Aufstandselement 4. Die beiden Aufstandselemente 4, 5 bilden gemeinsam eine ebene Auflagefläche für mindestens ein Solarelement 2, die zur Horizontalen leicht geneigt ist. Auf dieser Auflagefläche können ein oder zwei Solarelemente 2 nebeneinander aufliegen, wie in Fig. 5 ersichtlich. Die Aufstandselemente 4, 5 und die Basisfläche 3 sind einstückig aus demselben Metallblech gefertigt.

Das Halteelement 1 weist zur mechanischen Verbindung mit anderen im Wesentlichen baugleichen Halteelementen 1 ein Verbindungelement 9 in Form von Laschen 11, 11a auf. Die Laschen 11, 11a sind in der zusammengesetzten Stellung überlappend angeordnet und ermöglichen somit eine formschlüssige Verbindung von zwei im Wesentlichen baugleichen Halteelementen 1 zu einer Anordnung 100, wie in Fig. 5 abgebildet. Wie in Fig. 1, 1a ersichtlich, werden die Laschen 11, 11a vom Metallblech selbst ausgebildet bzw. schließen an dieses einstückig an.

Fig. 1a zeigt eine alternative Variante des Halteelements 1 mit andersartiger Lasche 11a.

Fig. 1b zeigt eine weitere Variante des Halteelements 1, bei der die Verbindungsschicht 6 einen Überstand 50 ausbildet, mit welchem die Verbindungsschicht 6 über die Unterseite des Halteelements hinausragt. Der Überstand 50 ist an zwei gegenüberliegenden Seiten des Halteelements 1 vorgesehen und vergrößert die effektive Verbindungsfläche. Möglich ist auch, dass die Basisfläche 3 im Bereich des Überstands 50 verbreitert ist.

Fig. 2 zeigt eine Untersicht des Halteelements nach Fig. 1. Hier ist die Verbindungsschicht 6 besonders gut ersichtlich, welche in diesem Beispiel durch zwei parallel auf die Unterseite der Basisfläche 3 des Halteelements 1 aufgeklebte Bitumenbahnen gebildet wird.

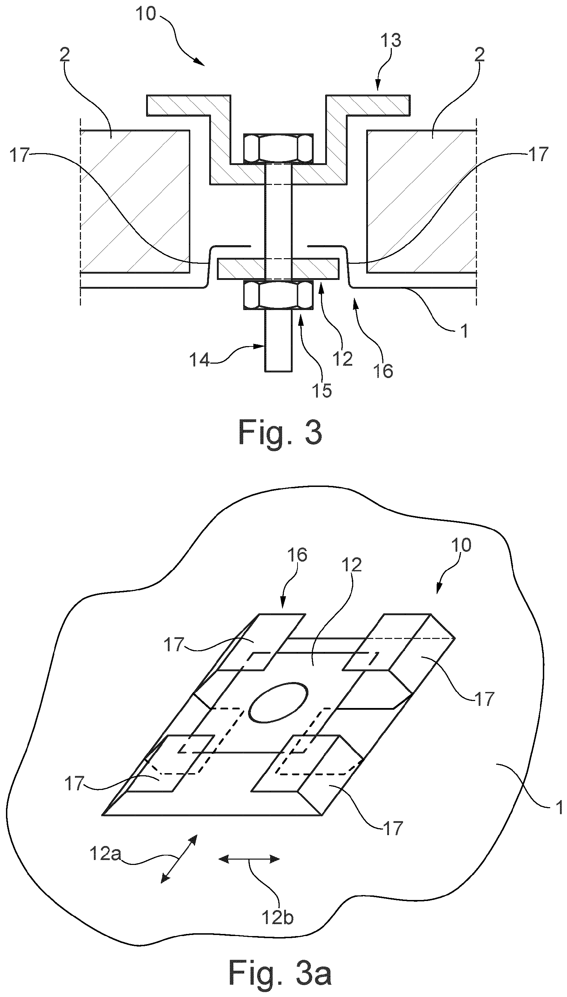

Zur Befestigung von mindestens einem Solarelement 2 weist das Halteelement 1 an den beiden Aufstandsflächen 4, 5 jeweils ein Befestigungselement 10 auf. Ein beispielhaftes Befestigungselement 10 ist im Detail in Fig. 3 und 3a abgebildet. Das Befestigungselement 10 umfasst eine Mitnahmeplatte 12, eine Klemmplatte 13, eine Schraube 14 und eine Mutter 15. Die Mitnahmeplatte 12 ist in einer Führungstasche 16, welche von verformten Laschen 17 des Halteelements 1 gebildet wird, beweglich gelagert, wobei die Bewegungsfreiheit der Mitnahmeplatte 12 in Querrichtung 12a des Halteelements 1 größer ist als in Längsrichtung 12b des Halteelements 1, um sicherzustellen, dass auch bei einer nicht exakten Befestigung des Halteelements 1 auf der Standfläche 7 das Solarelement 2 zuverlässig an dem Halteelement 1 befestigt werden kann. Nachdem die Mitnahmeplatte 12 in eine Befestigungsposition gebracht wurde, in welcher die Klemmplatte 13, die über die Schraube 14 mit der Mitnahmeplatte 12 verbunden ist, einen Rand des Solarelement 2 übergreift, wird durch Anziehen der Schraube 14 das Solarelement 2 an dem Halteelement 1 über die Klemmplatte 13 festgeklemmt.

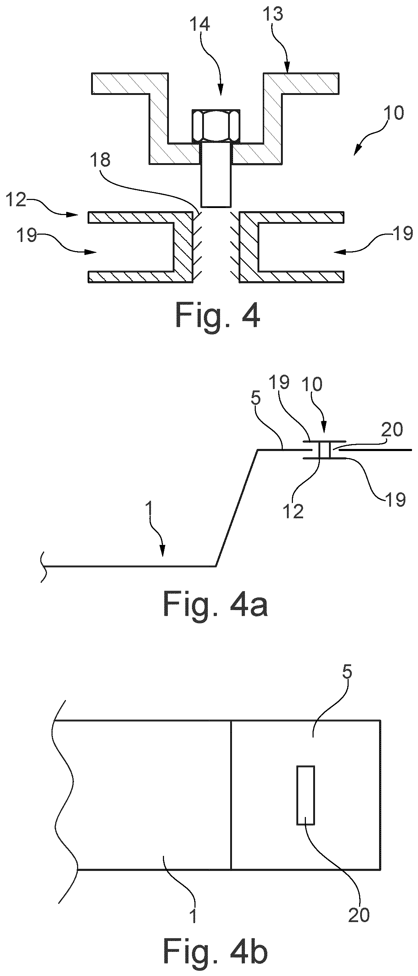

In Fig. 4, 4a und 4b ist eine alternative Variante des Befestigungselements 10 abgebildet. Die Mitnahmeplatte 12 weist bei dieser Variante ein Gewinde 18 auf, sodass die Schraube 14 direkt mit der Mitnahmeplatte 12 verbunden werden kann. Ferner weist die Mitnahmeplatte 12 links und rechts des Gewindes zwei Seitenteile 19 mit u-förmigem Querschnitt auf. Wie in Fig. 4a ersichtlich, wird die Mitnahmeplatte 12 in einer Aussparung 20 des Halteelements 1 positioniert, sodass die Seitenteile seitlich über die Aussparung 20 hinausragen und somit ein Herausfallen der Mitnahmeplatte 12 aus der Aussparung 20 verhindern. Fig. 4b zeigt ein Halteelement mit einer langlochförmigen Aussparung 20. Nach Befestigung eines Solarelements 2 mit dem alternativen Befestigungselement 10 gemäß Fig. 4, 4a, und 4b hat die Mitnahmeplatte 12 in der Aussparung 20 weiterhin eine gewisse Bewegungsfreiheit in Querrichtung 12a und in Längsrichtung 12b. Dadurch können Ungenauigkeiten bei der Montage oder Unterschiede in der thermischen Ausdehnung von verschiedenen Materialien effektiv ausgeglichen werden.

Fig. 5 zeigt eine Kombination 200 von mehreren Halteelementen 1, die über Verbindungselemente 9 miteinander verbunden sind und auf denen über Befestigungselemente 10 mehrere Solarelemente 2 befestigt sind, sodass sie gemeinsam eine Solaranlage bilden. Die Kombination 200 kann in einer Konstruktion 300, insbesondere einer Dachkonstruktion, mit einer Dachfläche eines Gebäudes verbunden werden, wobei die Verbindungsschichten 6 der Halteelemente 1 mit der Dachfläche verklebt oder verschweißt werden.

## Patentansprüche

1. Halteelement (1) für zumindest ein Solarelement (2), insbesondere ein Photovoltaikmodul, aufweisend:
eine Basisfläche (3);
zumindest ein von der Basisfläche (3) permanent abstehendes erstes Aufstandselement (4) zur Auflage und/oder Befestigung des zumindest einen Solarelements (2); und/oder
zumindest ein von der Basisfläche (3) permanent abstehendes zweites Aufstandselement (5) zur Auflage und/oder Befestigung des zumindest einen Solarelements (2), vorzugsweise wobei das zweite Aufstandselement (5) weiter von der Basisfläche (3) absteht als das erste Aufstandselement (4),
**dadurch gekennzeichnet, dass**
an einer Unterseite des Halteelements (1) zumindest eine Verbindungsschicht (6) für eine stoffschlüssige Verbindung mit einer Standfläche (7), insbesondere einer Gebäudefläche, angeordnet ist, wobei die Verbindungsschicht (6) ein Verbindungsmaterial, insbesondere ein Bitumenmaterial (8), aufweist und das Halteelement (1) von einem Transportzustand in einen Montagezustand, in welchem die Verbindungsschicht (6) mit der Standfläche (7) verbindbar ist, überführbar ist.

2. Halteelement (1) nach Anspruch 1, **dadurch gekennzeichnet, dass** die Verbindungsschicht (6) in dem Transportzustand mit einem vorzugsweise werkzeuglos lösbaren Abdeckelement, insbesondere einer Abdeckfolie, abgedeckt ist.

3. Halteelement (1) nach Anspruch 1 oder 2, **dadurch gekennzeichnet, dass** die Verbindungsschicht (6) direkt mit der Unterseite des Halteelements (1), insbesondere direkt mit einer Unterseite der Basisfläche (3), verbunden ist.

4. Halteelement (1) nach einem der Ansprüche 1 bis 3, **dadurch gekennzeichnet, dass** die Verbindungsschicht (6) eine Dicke zwischen 1,5 mm und 7 mm, insbesondere zwischen 2 mm und 7 mm oder zwischen 2,5 mm und 5 mm, aufweist.

5. Halteelement (1) nach einem der Ansprüche 1 bis 4, **dadurch gekennzeichnet, dass** das erste (4) und/oder das zweite Aufstandselement (5) integral mit der Basisfläche (3) ausgeformt ist/sind.

6. Halteelement (1) nach einem der Ansprüche 1 bis 5, **dadurch gekennzeichnet, dass** das Halteelement (1) zumindest ein Verbindungselement (9) vorzugsweise an der Basisfläche (3), an dem ersten (4) und/oder an dem zweiten Aufstandselement (5) aufweist, welches Verbindungselement (9) zur Verbindung mit einem weiteren, insbesondere gleichartig ausgebildeten, Halteelement (1) eingerichtet ist.

7. Halteelement (1) nach einem der Ansprüche 1 bis 6, **dadurch gekennzeichnet, dass** an dem ersten (4) und/oder zweiten Aufstandselement (5) zumindest ein Befestigungselement (10) zur lösbaren Befestigung des zumindest einen Solarelements (2) vorgesehen ist, vorzugsweise wobei das Befestigungselement (10) zwischen einem Befestigungszustand, in dem das Befestigungselement (10) an einer Position fixiert ist, und einem Anordnungszustand, in dem das Befestigungselement in einer Führung verschieblich ist, überführbar ist.

8. Kombination (200), insbesondere Solaranlage, aus
zumindest einem Halteelement (1) für zumindest ein Solarelement (2) und
zumindest einem Solarelement (2), welches vorzugsweise lösbar mit dem zumindest einen Halteelement (1) verbunden ist,
**dadurch gekennzeichnet, dass** das zumindest eine Halteelement (1) nach einem der Ansprüche 1 bis 7 ausgebildet ist.

9. Kombination (200) nach Anspruch 8, **dadurch gekennzeichnet, dass** eine Mehrzahl an Halteelementen (1) und eine Mehrzahl an Solarelementen (2) vorgesehen ist, wobei mehrere Halteelemente (1) vorzugsweise miteinander verbunden sind, insbesondere direkt oder indirekt über ein Adapterelement.

10. Konstruktion (300), insbesondere Dachkonstruktion, mit einem Halteelement (1), welches mit einer Standfläche (7), welche insbesondere an einem Dach eines Gebäudes angeordnet ist, stoffschlüssig verbunden ist, **dadurch gekennzeichnet, dass** das Halteelement (1) nach einem der Ansprüche 1 bis 7 ausgebildet ist.

11. Konstruktion (300) nach Anspruch 10, **dadurch gekennzeichnet, dass** an der Standfläche (7) eine weitere Verbindungsschicht angeordnet ist, die vorzugsweise ein weiteres Verbindungsmaterial, insbesondere ein weiteres Bitumenmaterial, aufweist, insbesondere aus diesem besteht.

12. Herstellungsverfahren für ein Halteelement gemäß einem der Ansprüche 1 bis 7, mit den Schritten:
Erzeugen der Basisfläche (3), des ersten Aufstandselements (4) und/oder des zweiten Aufstandselements (5), vorzugsweise durch Umformung, insbesondere durch Tiefziehen, eines Ausgangskörpers;
Anbringen der Verbindungsschicht (6), die das Verbindungsmaterial, vorzugsweise ein Bitumenmaterial (8), aufweist, insbesondere auf die Basisfläche (3).

13. Herstellungsverfahren nach Anspruch 12, **dadurch gekennzeichnet, dass** die Verbindungsschicht (6) aus dem Verbindungsmaterial besteht und direkt auf die Unterseite der Basisfläche (3) aufgetragen wird.

14. Montageverfahren zur Montage zumindest eines Halteelements (1) gemäß den Ansprüchen 1 bis 7 an einer Standfläche (7), mit den Schritten:
i) Bereitstellen des zumindest einen Halteelements (1);
ii) Überführen des zumindest einen Halteelements (1) von dem Transportzustand in den Montagezustand, vorzugsweise durch Abnehmen eines Abdeckelements von der Verbindungsschicht (6);
iii) Anordnen des zumindest einen Halteelements (1) an der Standfläche (7), wobei die Verbindungsschicht (6) der Standfläche zugewandt ist; und
iv) Verbinden der Verbindungsschicht (6) mit der Standfläche (7), wobei die Standfläche vorzugsweise eine weitere Verbindungsschicht aufweist.

15. Montageverfahren nach Anspruch 14, **gekennzeichnet durch** den weiteren Schritt
iv-a) Erwärmen der Verbindungsschicht (6) und/oder der Standfläche (7), beispielsweise mit einer Heißluftvorrichtung oder einer Flämmvorrichtung oder durch Sonneneinstrahlung.
